# EUROPEAN PATENT SPECIFICATION

(11) **EP 3 440 448 B1**
(45) Date of publication and mention of the grant of the patent: **05.05.2021**
(21) Application number: 17778508.6
(22) Date of filing: 04.04.2017
(51) Int. Cl.: G01C 5/06, G01C 25/00, G01L 27/00, G01S 19/39, G01S 19/52, G01S 5/02

(54) **AUTOMATIC PRESSURE SENSOR OUTPUT CALIBRATION FOR RELIABLE ALTITUDE DETERMINATION**
AUTOMATISCHE DRUCKSENSORAUSGANGSKALIBRIERUNG ZUR ZUVERLÄSSIGEN HÖHENBESTIMMUNG
ÉTALONNAGE AUTOMATIQUE DE SORTIE DE CAPTEUR DE PRESSION POUR DÉTERMINATION FIABLE D'ALTITUDE

(30) Priority: 05.04.2016 US 201662318346 P
(43) Date of publication of application: 13.02.2019
(73) Proprietor: Fathom Systems Inc., Vancouver BC V6C 1T1 (CA)
(72) Inventor: AFZAL, Muhammad Haris, Vancouver, British Columbia V6C 1T1 (CA)
(74) Representative: Stöckeler, Ferdinand
(86) International application number: PCT/CA2017/050411
(87) International publication number: WO 2017/173535

(56) References cited:
- WO-A1-2014/202111
- US-A1- 2012 182 180
- US-A1- 2012 290 253
- US-A1- 2014 012 529
- US-A1- 2015 006 100
- US-A1- 2015 247 917
- US-B1- 6 518 918
- US-B2- 8 224 312
- Anonomous: "Air Pressure at Altitude Calculator", Mide Engineering Solutions Mide Engineering Solutions, 3 March 2016 (2016-03-03), pages 1-4, XP055579134, Retrieved from the Internet: URL:https://web.archive.org/web/2016030304 1544/https://www.mide.com/pages/air-pressu re-at-altitu de-calculator

## Description

### Technical Field

The present disclosure relates to absolute altitude determination of electronic devices using on board atmospheric pressure sensors.

### Background

Positioning of electronic devices is achieved using one or more of: GNSS satellites, Wi-Fi access points and cellular base stations, for example. Although it is possible to position electronic devices outdoors in three dimensions using GNSS, indoor positioning in three dimensions presents challenges.

Altitude may be determined by atmospheric pressure sensors of the electronic devices. Altitudes are calculated based on differences between atmospheric pressure sensor output and pressure at mean seal level. Because the atmospheric pressure sensors of electronic devices are often uncalibrated, large deviations in determined altitudes may occur. For example, different electronic devices that include similar hardware may generate altitudes that are 12 metres off from one another.

In order to avoid errors that may arise due to uncalibrated atmospheric pressure sensors, some electronic devices calculate relative altitudes, which are differences in altitude over a selected time period or distance. Because a starting location is relied upon, relative altitude determination has limited applications. For example, relative altitude determination may be used to determine if the user transporting the electronic device is moving up or down but will not be able to determine the user's floor in a multistorey building unless a starting floor is input for reference.

Manual calibration of atmospheric pressure sensors by electronic device manufacturers may lengthen production time and delay delivery of electronic devices, which is undesirable. Manual calibration by electronic device users is inconvenient and may be viewed as an annoyance, particularly if use of the electronic device is restricted until the calibration is performed.

US 2012/290253 A1 discloses a method for determining an elevation above ground level, at which a communication device having an electronic processor and a sensor is located. The method may include obtaining a reference height of a first location, the reference height being a known height relative to ground level, the reference height having a corresponding reference pressure. A pressure measurement at a second location is obtained with the sensor. A height is calculated with the electronic processor at the second location based on the pressure measurement, the reference height, and the reference pressure. The height may also be based on temperature data, location data, motion data, and/or the like.

US 8 224 312 B2 A teaches a method of determining an environment wherein a mobile terminal of a mobile radiocommunication network is situated. The method includes retrieving an identifier of the mobile terminal, retrieving at least one technical feature of the mobile terminal according to the identifier, taking a measurement indicative of a quality of the radio signal at the mobile terminal, and applying to the measurement an operation for determining the environment, the operation depending on at least one parameter.

### Summary

According to an aspect of the present disclosure there is provided a method of calibrating output of an absolute atmospheric pressure sensor of an electronic device, comprising: determining, at a processor of the electronic device, that a location of the electronic device is at a known absolute altitude and outdoors; receiving, at the processor, a measured pressure from the absolute atmospheric pressure sensor; calculating, at the processor, a difference between the measured pressure and a reference pressure, the reference pressure determined by adjusting a mean sea level pressure based on the known absolute altitude relative to mean sea level at the location of the electronic device; storing the difference, in a memory of the electronic device; and applying the difference to the output of the absolute atmospheric pressure sensor; wherein determination that the electronic device is at the known absolute altitude and outdoors occurs without user input, wherein the known absolute altitude is ground level and characterized in that determining that the location of the electronic device is at ground level and outdoors comprises: receiving, at the processor of the electronic device, motion sensor data of the electronic device indicative of a selected type of motion of the user for a threshold period of time; and receiving, at a GNSS sub-system of the electronic device in communication with the processor, GNSS signals, and determining that a Signal-to-Noise ratio (SNR) of the GNSS signals is above a threshold for the threshold period of time, such that both the motion sensor data indicative of the selected type of motion and the GNSS signals having the SNR above the threshold are received for a period of time that meets the threshold period of time. The threshold period of time may be between two minutes and thirty minutes. For example, the threshold period of time may be approximately 5 minutes. The threshold may be approximately 34 dB.

According to another aspect of the present disclosure there is provided a non-transitory computer-readable medium according to claim 5.

According to yet another aspect of the present disclosure there is provided an electronic device according to claim 6.

### Drawings

The following figures set forth examples in which like reference numerals denote like parts. The present disclosure is not limited to the examples illustrated in the accompanying figures.

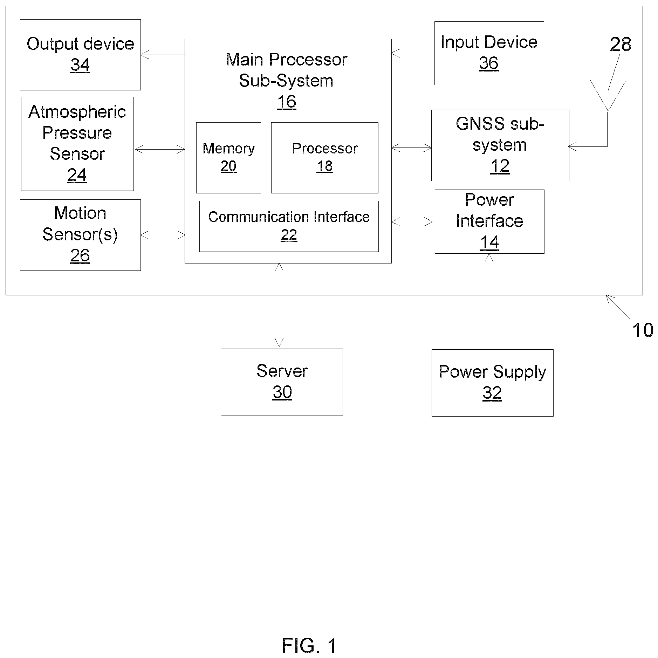

FIG. 1 is a block diagram of an electronic device operable to implement atmospheric pressure sensor calibration methods described herein.
FIG. 2 is a flowchart depicting a method of calibrating an atmospheric pressure sensor according to an example.
FIG. 3 is a graph depicting an example motion sensor output pattern of the electronic device of FIG. 1.
FIG. 4 is a graph depicting example Signal-to-Noise Ratio (SNR) of GNSS signals received at the electronic device of FIG. 1.
FIG. 5 is a flowchart depicting a method of determining that a user is at ground level and outdoors according to an example.
FIGS. 6 and 7 are schematic diagrams showing a user transporting an electronic device located at ground level and in a building, respectively.

### Detailed Description

It will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. Unless explicitly stated, the methods described herein are not constrained to a particular order or sequence. Additionally, some of the described methods or elements thereof can occur or be performed at the same point in time. In other instances, well-known methods, procedures and components have not been described in detail so as not to obscure the examples described herein.

Referring to Figre 1, an example electronic device 10 includes a main processor sub-system 16 that controls overall operation of thereof. The main processor sub-system 16 includes a processor 18, a memory 20 and a communication interface 22. An example of a main processor sub-system 16 is a Single Board Computer (SBC) with an Operating System (OS).

**The** communication interface 22 enables communication with a server 30 via a wireless or a wired connection. The server 30 may be a single server or a group of servers in communication with one another. The electronic device 10 may additionally or alternatively communicate directly with another electronic device. In an example, the electronic device 10 communicates with a navigation system of a vehicle via the communication interface 22.

The electronic device 10 includes a GNSS antenna 28 for receiving GNSS signals and a GNSS sub-system 12 in communication with the main processor sub-system 16 and the GNSS antenna 28. The GNSS sub-system 12 generates digitized GNSS data corresponding to the GNSS signals for further processing by the main processor sub-system 16. Examples of a GNSS sub-system 12 include: a standalone GNSS receiver capable of generating a location estimate locally, an Assisted GNSS (A-GNSS) receiver that receives assistance data from another device to provide a location estimate, a Radio Frequency (RF) Front End (FE) in association with a Software Defined Radio (SDR) receiver at the electronic device 10 or distributed over one or more servers 30.

**An** atmospheric pressure sensor 24 is in communication with the main processor sub-system 16 to send atmospheric pressure sensor output thereto. The atmospheric pressure sensor 24 may be any sensor that is capable of outputting an indication of absolute atmospheric pressure at the location of the electronic device 10.

A motion sensor(s) 26 is in communication with the main processor sub-system 16 to send motion sensor(s) output thereto. The motion sensor(s) 26 may be an accelerometer, a gyroscope, a magnetometer or another type of sensor capable of detecting movement of the electronic device 10.

The electronic device 10 is powered by a power supply 32, which communicates with the main processor sub-system 16 via a power interface 14. In an example, the power supply 32 is one or more batteries. In another example, the power supply 32 is a power supply of a vehicle in which the electronic device 10 is installed.

The electronic device 10 may be a Smartphone, tablet, portable computer, laptop computer, activity tracking device, beacon, router, Machine-to-machine (M2M) device or an in-vehicle navigation system, for example. The electronic device 10 includes an output device 34 to indicate an absolute altitude of the electronic device 10 to a user. The absolute altitude that is output may be a distance above or below ground level or a floor number when the user transporting the electronic device 10 is in a building, for example. The output device 34 is in communication with the main processor sub-system 16 and may be one or more of: a display, a speaker and another output device, for example. The electronic device 10 may further include an input device 36 in communication with the main processor sub-system 16 to receive user input.

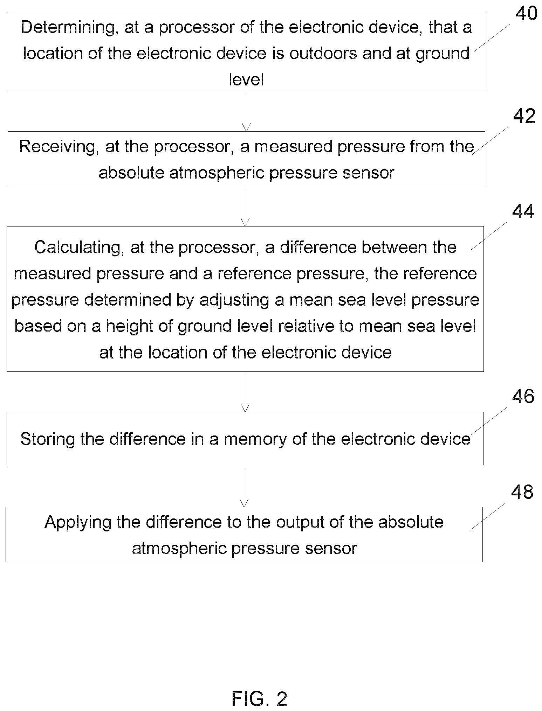

Referring to FIG. 2, a method of calibrating output of an absolute atmospheric pressure sensor of an electronic device includes: determining 40, at a processor 18, that a location of the electronic device 10 is at ground level and outdoors, receiving 42, at the processor 18, a measured pressure (P_{SENSOR}) from the absolute atmospheric pressure sensor 24, calculating 44, at the processor 18, a difference between the measured pressure and a reference pressure (P_{REFERENCE}), the reference pressure determined by adjusting a mean sea level pressure based on an altitude of ground level relative to mean sea level at the location of the electronic device 10, storing the difference 46 in a memory 20 of the electronic device 10 and applying 48 the difference to the output of the absolute atmospheric pressure sensor 24.

As will be understood by a person skilled in the art, the difference may be a positive value that is added to subsequently measured pressures or a negative value that is added to subsequently measured pressures.

Regularly updated mean sea level pressures are available for many different locations around the world from various weather service providers, such as CustomWeather Inc. and Environment Canada, for example. A frequency of mean sea level pressure updates and a granularity of areas over which the mean sea level pressures apply may be selected to achieve a desired accuracy and data transmission load.

The altitude of ground level relative to mean sea level varies depending on where the electronic device 10 is located in the world. The altitude is determined based on a topographic map, which provides altitudes relative to mean sea level at different locations in the world. Topographic maps are available from many different sources, including government agencies, such as the Centre for Topographic Information in Canada, for example. Online topographic information resources are also available, including from Google™ maps, for example.

The mean sea level pressure is adjusted based on the altitude of ground level to determine PREFERENCE by way of mathematical methods that are well known by those skilled in the art. In an example, the ground level altitude that has been determined is further adjusted by 1 metre in order to locate the electronic device at approximately pocket level, for example, with respect to the user.

The electronic device 10 determines that a user transporting the electronic device 10 is at ground level and outdoors, at 40, prior to calculating the difference, at 44. In an example, user input is relied upon to determine when the electronic device 10 is located at ground level and outdoors. The user input may be received in response to a query generated by the processor 18 or in response to a user selecting an atmospheric pressure sensor calibration option via a user interface of the electronic device 10, for example.

Other example methods disclosed herein automatically determine that an electronic device 10 is at ground level and outdoors. The automatic determination of outdoor and ground level location may be performed without user input and without the user being made aware that the determination is occurring. Electronic device users may move into and out of buildings and above and below ground level throughout the day. Users that are indoors may be at any altitude relative to ground level. The same is true for users that are outdoors. Users with gait-type movement may be travelling indoors or outdoors. When users transporting electronic devices 10 travel for a relatively long period of time with gait-type movement, it may be determined that the users are outdoors and at ground level. The location of the electronic device may be determined to be outdoors and at ground level when a first criterion and a second criterion are met for a threshold period of time.

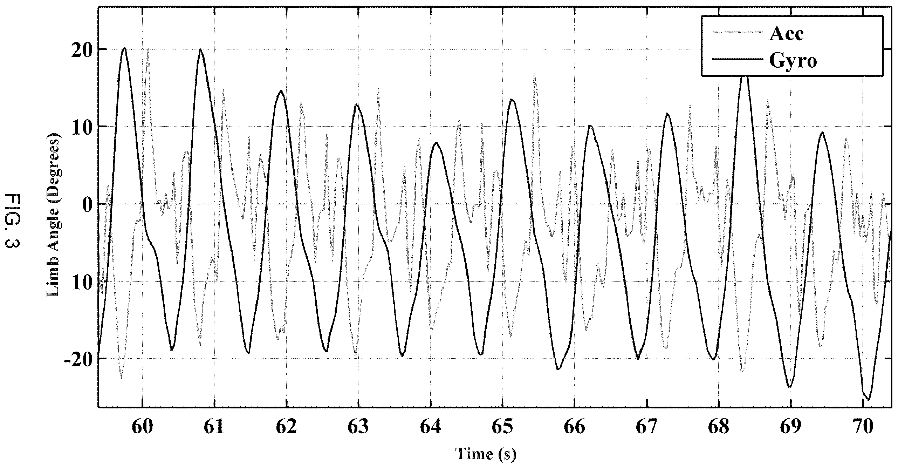

The first criterion is met when output from the motion sensor(s) 26 indicates that the motion of the user transporting the device corresponds to a selected type of motion. The processor 18 determines if the sensor output corresponds to a selected type of motion by matching a motion sensor output pattern to known motion sensor output patterns. The motion sensor output pattern may correspond to a gait of a user when the user transporting the electronic device 10 is walking or running, for example. Referring to FIG. 3, an example accelerometer output pattern that corresponds to a walking gait is shown. Other known motion sensor output patterns are also possible, such as a sensor output pattern corresponding to a user transporting the electronic device 10 in a pocket, for example, while riding a bike. In general, output from the motion sensor(s) 26 may be matched to any known motion sensor output pattern from which it is determinable that the electronic device 10 is at ground level.

The first criterion may alternatively be met when output from the GNSS sub-system 12 indicates that the motion of the electronic device 10 corresponds to a selected type of motion. In this example, a difference in GNSS location of the electronic device 10 over a period of time may be relied upon to indicate movement of the electronic device 10. Walking may be determined when a speed of approximately 4 km/h is determined. Similarly, when a speed of 30 km/h or greater is determined, the electronic device 10 may be determined to be travelling in a vehicle, such as a car, for example. Biking or other modes of transportation may be determined when a speed indicative of the mode of transportation is determined. In the example in which the electronic device 10 communicates with the electronic system of a vehicle, the first criterion may also be met when transportation of the electronic device 10 by a vehicle is determined based output from an odometer, for example, of the vehicle. Similar to the GNSS example, when a speed of 30 km/h or greater is determined, the electronic device 10 is determined to be travelling in a vehicle.

The selected types of motion are stored in memory 20 of the main processor system 16 and compared to one or more of: motion sensor output, GNSS-based movement determination and odometer-based movement determination in order to determine if the first criterion is met. According to an example, confirmation of the selected type of motion determined by motion sensor output using GNSS output may be performed. In this example, when the sensor output pattern corresponds to a selected type of motion over a time period, the GNSS output may be used to confirm that a corresponding expected distance has been travelled over the time period. By confirming the selected type of motion determined by motion sensor output using GNSS output, errors due to special cases, such as a user transporting an electronic device 10 walking around a rooftop track or running on a treadmill, for example, are avoided. Other confirmation checks may also be performed.

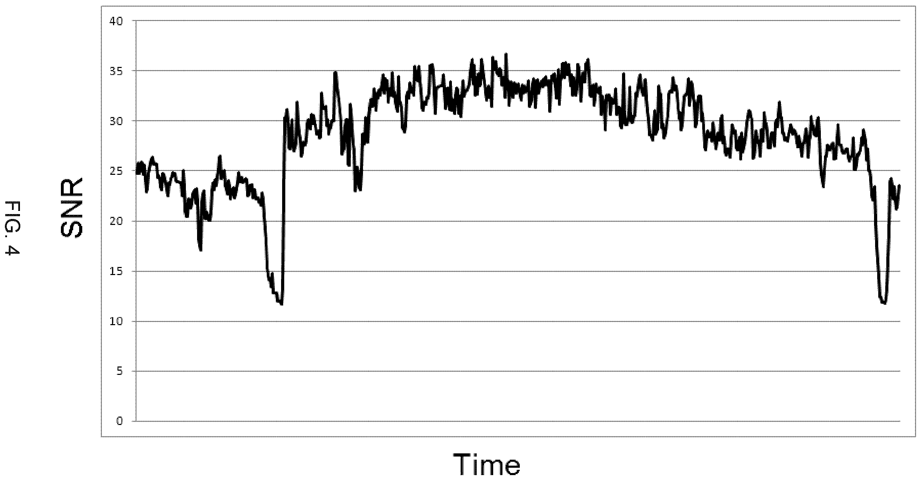

The second criterion is met when the Signal-to-Noise ratio (SNR) of GNSS signals received at the electronic device 10 is above a threshold. If no GNSS signals are received at the electronic device 10, such as when the electronic device 10 is indoors, for example, the second criterion is not met. In an example, the threshold is between 34 and 35 dB. In another example, the threshold is approximately 34 dB. Referring to FIG. 4, SNR values of GNSS signals received at the electronic device are plotted versus time by way of example.

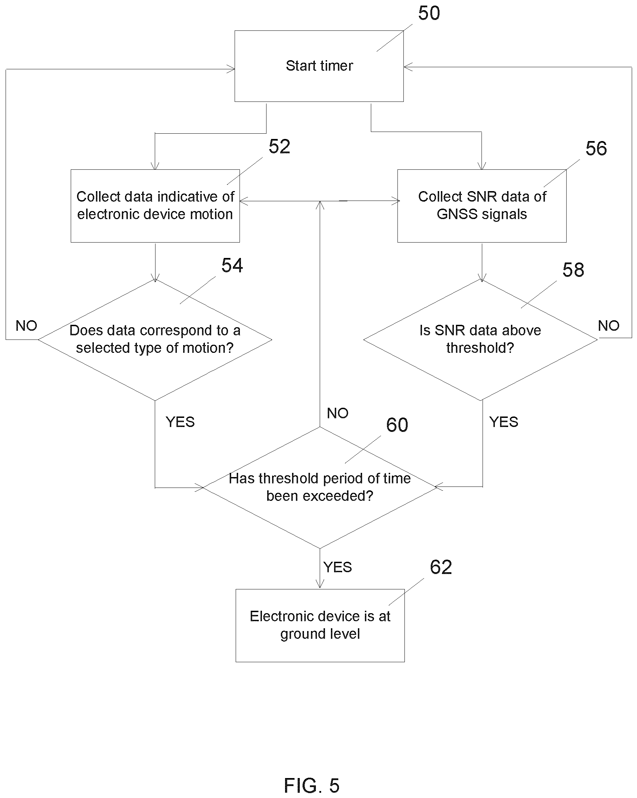

**An** example method of determining that a user transporting an electronic device is at ground level and outdoors is shown in FIG. 5. At 50, a timer starts. At 52, data indicative of electronic device motion, such as motion sensor output, GNSS location data or odometer data, for example, is collected and, at 56, SNR data of GNSS signals is collected. At 54, the processor 18 of the electronic device 10 determines if a first criterion has been met by determining if the data collected corresponds to a selected type of motion. If not, the time is re-started at 50 and further motion sensor data is collected. At 58, the processor 18 of the electronic device 10 determines if a second criterion has been met by determining if the SNR data of GNSS signals received at the electronic device 10 is above a threshold. If not, the time is re-started at 50 and further SNR data of GNSS signals is collected. If both criteria have been met, it is then determined whether or not a threshold time period has been exceeded. If yes, the electronic device 10 is determined to be at ground level, at 62. If not, collection of data indicative of device motion and SNR data of GNSS signals continues at 52 and 56, respectively.

The threshold period of time over which the first criterion and second criterion are met in order for a determination to be made that the electronic device 10 is at ground level is between two and thirty minutes. In an example, the threshold period of time is approximately five minutes. Lower or higher threshold periods of time are also possible.

According to an example, calibrated absolute atmospheric pressure sensor output may be provided with an indication of the error associated therewith. In this example, the second criterion and the threshold period of time include error indications that may be combined to indicate error of the calibrated atmospheric pressure sensor output. For example, SNR below the threshold may be collected in FIG. 5 and used to calculate the difference in the method of FIG. 2. The amount that the SNR is below the threshold is then used to generate an indication of error. An altitude ± error is then output by the electronic device 10. The error may be increased or decreased based on the time over which the first and second criteria were met. As will be understood by a person skilled in the art, if the time greatly exceeds the threshold period of time, the output is more reliable. Similarly, if the time is less than the threshold period of time, the output is less reliable.

The method of calibrating an atmospheric pressure sensor disclosed herein operates automatically such that a user of the electronic device 10 may not be aware that the calibration is underway. The method may run continuously in order to improve the reliability of the difference that is calculated. In this example, a current difference, which may also be referred to as a current bias, of the atmospheric pressure sensor that is stored in memory 20 of the electronic device 10 is replaced when a new difference is calculated that has less error associated therewith.

The method of calibrating an atmospheric pressure sensor may be performed by the main processor sub-system 16 of the electronic device 10 by executing one or more software applications that are stored in memory 20 as computer readable code. Alternatively, the method may be performed by dedicated hardware of the main processor sub-system 16, such as Application Specific Integrated Circuit (ASIC) or Graphics Processing Unit (GPU), for example, or by a combination of hardware and software. Parts of the method may alternatively be performed at one or more remote servers in communication with the electronic device 10.

The method may be performed entirely on the electronic device 10. In this example, mean sea level pressures and topographic maps are downloaded to the electronic device 10 and calculations are performed locally. In another example, the mean sea level pressures and topographic maps may alternatively be stored at the server 30 and sent to the electronic device 10 in response to requests that include locations of the electronic device 10. The method may then be performed locally. Alternatively, the method may be performed at the server 30 in response to requests from the electronic device 10 that include locations of the electronic device 10 and local measured ground level pressures output from the absolute atmospheric pressure sensor.

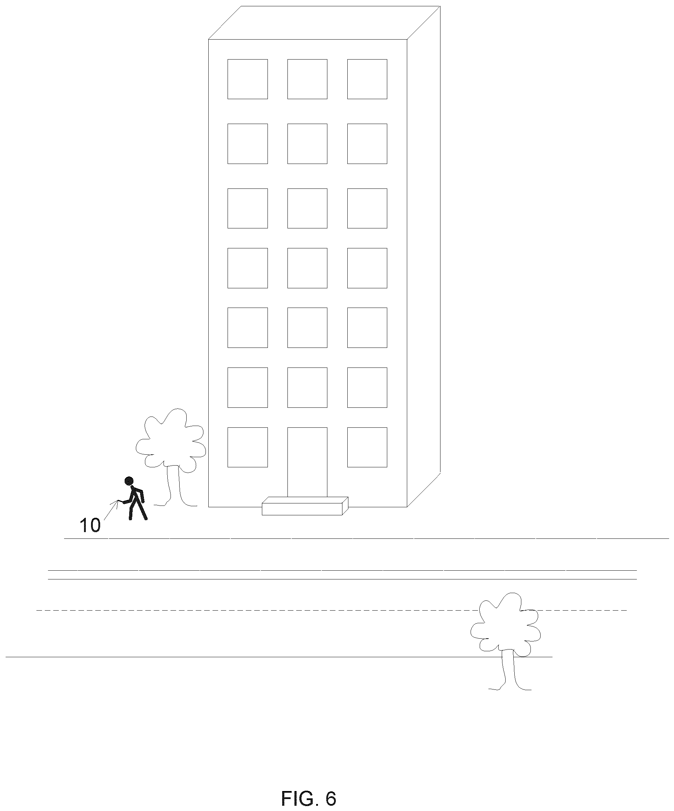

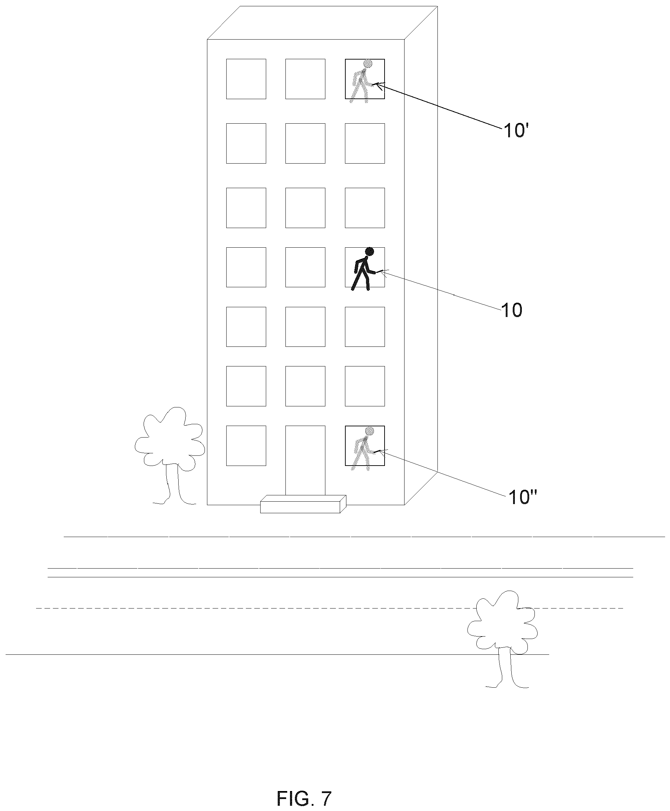

The calibrated output from the atmospheric pressure sensor is used to determine an altitude of the electronic device 10. FIG. 6 shows a user, who is carrying an electronic device 10, at ground level. FIG. 7 shows the user located on the 4^{th} floor of a building. Because the atmospheric pressure sensor 24 of the electronic device 10 carried by the user was calibrated according to the methods disclosed herein, the electronic device 10 is able to determine on which floor the user is located when the user is in the building. Uncalibrated atmospheric pressure sensors may result in altitude determinations that are up to 3 floors away from a user's actual location, as indicated by the users carrying electronic devices 10' and 10", which are shown on the 1^{st} and 7^{th} floors of the building, respectively.

In another example, the electronic device 10 automatically determines that a user transporting the electronic device 10 is at a known absolute altitude, such as ground level, for example, and outdoors in response to occurrence of an event. The event may be communication between the electronic device 10 and a beacon of an outdoor proximity network, for example. In this example, beacons of the proximity network have known absolute altitudes and PREFERENCE is determined by adjusting a mean sea level pressure based on the absolute altitude relative to mean sea level at the location of the electronic device. Communication between a beacon and the electronic device 10 may occur during a point of sale transaction or when the electronic device 10 receives a beacon broadcast from a nearby beacon, for example.

In general, any method that automatically determines that a user transporting the electronic device 10 is at a known absolute altitude, such as ground level, for example, and outdoors may be used. For example, a precise two-dimensional GPS location of the electronic device 10 combined with an accurate map that includes building structures may be sufficient to provide confirmation that the electronic device 10 is at a known absolute altitude and outdoors.

As will be understood by a person skilled in the art, outdoors may include covered outdoor locations, indoor locations adjacent to open windows or other indoor-type locations for which the atmospheric pressure sensor is able to indicate an outdoor pressure.

The methods described herein compensate for variability of atmospheric pressure sensor output of electronic devices 10. By calibrating atmospheric pressure sensor output, altitude determinations by the electronic devices are more likely to be accurate. Automatic calibration of the atmospheric pressure sensor output is convenient because calibration occurs without input from the user. Further, it improves the reliability of atmospheric pressure sensor output from the electronic device 10 because non-calibration due to a user forgetting to initiate the calibration, for example, is avoided.

**The** methods disclosed herein are globally applicable. The calibration may be performed at any location in the world for which current mean sea level pressure and topographic map information is available. Further, the altitudes determined using the calibrated atmospheric pressure sensor output are absolute altitudes. Thus, the altitude determined by the electronic device 10 may be combined with other positioning systems to provide locations of the electronic device 10 in three dimensions both indoors and outdoors.

Specific examples have been shown and described herein. However, modifications and variations may occur to those skilled in the art.

## Claims

1. A method of calibrating output of an absolute atmospheric pressure sensor of an electronic device (10), comprising:
Determining (40), at a processor (18) of the electronic device (10), that a location of the electronic device (10) is at a known absolute altitude and outdoors;
Receiving (42), at the processor (18), a measured pressure from the absolute atmospheric pressure sensor;
Calculating (44), at the processor (18), a difference between the measured pressure and a reference pressure, the reference pressure determined by adjusting a mean sea level pressure based on the known absolute altitude relative to mean sea level at the location of the electronic device (10);
storing (46) the difference, in a memory of the electronic device (10); and
applying (48) the difference to the output of the absolute atmospheric pressure sensor;
wherein determination (40) that the electronic device (10) is at the known absolute altitude and outdoors occurs without user input,
wherein the known absolute altitude is ground level and **characterized in that**
determining (40) that the location of the electronic device (10) is at ground level and outdoors comprises:
receiving, at the processor (18) of the electronic device (10), motion sensor data of the electronic device (10); and
receiving, at a GNSS sub-system of the electronic device (10) in communication with the processor (18), GNSS signals,
determining that for at least a threshold period of time the motion sensor data is indicative of a selected type of motion and the GNSS signals have a Signal-to-Noise ratio above a threshold.

2. The method of claim 1, wherein determining (40) that the location of the electronic device (10) is at the known absolute altitude and outdoors occurs in response to communication with a beacon of a proximity network, the beacon being located at the known absolute altitude and outdoors.

3. The method of claim 1, wherein determining (40) that the motion sensor data is indicative of a selected type of motion includes receiving, at the processor (18), GNSS output indicating a speed of travel of the electronic device (10).

4. The method of claim 1, wherein the selected type of motion is walking or running of a user transporting the electronic device (10).

5. A non-transitory computer-readable medium having computer-readable code stored thereon, the computer-readable code executable by at least one processor (18) of the electronic device (10) to perform the method of claim 1.

6. An electronic device (10) comprising:
an absolute atmospheric pressure sensor (24) for generating output indicative of an absolute altitude of the electronic device (10); and
a processor (18) in communication with a motion sensor (26) and a GNSS sub-system (12) to determine (40) that a location of the electronic device (10) is at a known absolute altitude and outdoors, the processor (18): receiving (42) a measured pressure from the absolute atmospheric pressure sensor (24), calculating (44) a difference between the measured pressure and a reference pressure, storing (46) the difference in the memory (20) of the electronic device (10) in communication with the processor (18) and applying (48) the difference to the output of the absolute atmospheric pressure sensor (24), the reference pressure determined by adjusting a mean sea level pressure based on the known absolute altitude relative to mean sea level at the location of the electronic device (10),
wherein the known absolute altitude is ground level and the location of the electronic device (10) is determined to be at ground level and outdoors when for at least a threshold period of time motion sensor data from the motion sensor (26) is indicative of a selected type of motion and a Signal-to-Noise ratio of received GNSS signals is above a threshold.

7. The electronic device (10) of claim 6, the selected type of motion comprising walking or running of a user transporting the electronic device (10).

8. The electronic device (10) of claim 6, wherein determining that the motion sensor data is indicative of a selected type of motion includes receiving GNSS output indicating a speed of travel of the electronic device (10).

## Patentansprüche

1. Ein Verfahren zum Kalibrieren der Ausgabe eines Sensors für absoluten Atmosphärendruck einer elektronischen Vorrichtung (10), das folgende Schritte aufweist:
Bestimmen (40), an einem Prozessor (18) der elektronischen Vorrichtung (10), dass sich ein Standort der elektronischen Vorrichtung (10) auf einer bekannten absoluten Höhe und im Freien befindet;
Empfangen (42), an dem Prozessor (18), eines gemessenen Drucks von dem Sensor für absoluten Atmosphärendruck;
Berechnen (44), an dem Prozessor (18), einer Differenz zwischen dem gemessenen Druck und einem Referenzdruck, wobei der Referenzdruck durch Einstellen eines mittleren Meeresspiegeldrucks auf Basis der bekannten absoluten Höhe relativ zum mittleren Meeresspiegel an dem Standort der elektronischen Vorrichtung (10) bestimmt wird;
Speichern (46) der Differenz in einem Speicher der elektronischen Vorrichtung (10); und
Anwenden (48) der Differenz auf die Ausgabe des Sensors für absoluten Atmosphärendruck;
wobei die Bestimmung (40), dass sich die elektronische Vorrichtung (10) auf der bekannten absoluten Höhe und im Freien befindet, ohne Benutzereingabe erfolgt,
wobei die bekannte absolute Höhe Bodenhöhe ist und **dadurch gekennzeichnet, dass**:
das Bestimmen (40), dass sich der Standort der elektronischen Vorrichtung (10) auf Bodenhöhe und im Freien befindet, folgende Schritte aufweist:
Empfangen, an dem Prozessor (18) der elektronischen Vorrichtung (10), von Bewegungssensordaten der elektronischen Vorrichtung (10);
Empfangen, an einem GNSS-Teilsystem der elektronischen Vorrichtung (10), das mit dem Prozessor (18) in Kommunikation ist, von GNSS-Signalen und
Bestimmen, dass für zumindest eine Schwellenwertzeitspanne die Bewegungssensordaten eine ausgewählte Bewegungsart anzeigen und die GNSS-Signale ein Signal-Rausch-Verhältnis über einem Schwellenwert aufweisen.

2. Das Verfahren gemäß Anspruch 1, wobei das Bestimmen (40), dass sich der Standort der elektronischen Vorrichtung (10) auf der bekannten absoluten Höhe und im Freien befindet, ansprechend auf eine Kommunikation mit einem Funkfeuer eines Proximity-Netzwerks erfolgt, wobei sich das Funkfeuer auf der bekannten absoluten Höhe und im Freien befindet.

3. Das Verfahren gemäß Anspruch 1, wobei das Bestimmen (40), dass die Bewegungssensordaten eine ausgewählte Bewegungsart anzeigen, ein Empfangen, an dem Prozessor (18), einer GNSS-Ausgabe umfasst, die eine Fortbewegungsgeschwindigkeit der elektronischen Vorrichtung (10) anzeigt.

4. Das Verfahren gemäß Anspruch 1, wobei die ausgewählte Bewegungsart das Gehen oder Laufen eines Benutzers ist, der die elektronische Vorrichtung (10) transportiert.

5. Ein nicht-vorübergehendes computerlesbares Medium, auf dem computerlesbarer Code gespeichert ist, wobei der computerlesbare Code durch zumindest einen Prozessor (18) der elektronischen Vorrichtung (10) ausführbar ist, um das Verfahren gemäß Anspruch 1 durchzuführen.

6. Eine elektronische Vorrichtung (10), die folgende Merkmale aufweist:
einen Sensor für absoluten Atmosphärendruck (24) zum Erzeugen einer Ausgabe, die eine absolute Höhe der elektronischen Vorrichtung (10) anzeigt; und
einen Prozessor (18), der mit einem Bewegungssensor (26) und einem GNSS-Teilsystem (12) in Kommunikation ist, um zu bestimmen (40), dass sich ein Standort der elektronischen Vorrichtung (10) auf einer bekannten absoluten Höhe und im Freien befindet, wobei der Prozessor (18) Folgendes durchführt: Empfangen (42) eines gemessenen Drucks von dem Sensor für absoluten Atmosphärendruck (24), Berechnen (44) einer Differenz zwischen dem gemessenen Druck und einem Referenzdruck, Speichern (46) der Differenz in dem Speicher (20) der elektronischen Vorrichtung (10), der mit dem Prozessor (18) in Kommunikation ist, und Anwenden (48) der Differenz auf die Ausgabe des Sensor für absoluten Atmosphärendruck (24), wobei der Referenzdruck durch Einstellen eines mittleren Meeresspiegeldrucks auf Basis der bekannten absoluten Höhe relativ zum mittleren Meeresspiegel an dem Standort der elektronischen Vorrichtung (10) bestimmt wird.
wobei die bekannte absolute Höhe Bodenhöhe ist und der Standort der elektronischen Vorrichtung (10) als auf Bodenhöhe und im Freien befindlich bestimmt wird, wenn für zumindest eine Schwellenwertzeitspanne Bewegungssensordaten von dem Bewegungssensor (26) eine ausgewählte Bewegungsart anzeigen und ein Signal-Rausch-Verhältnis der empfangenen GNSS-Signale größer als ein Schwellenwert ist.

7. Die elektronische Vorrichtung (10) gemäß Anspruch 6, wobei die ausgewählte Bewegungsart das Gehen oder Laufen eines Benutzers aufweist, der die elektronische Vorrichtung (10) transportiert.

8. Die elektronische Vorrichtung (10) gemäß Anspruch 6, wobei das Bestimmen, dass die Bewegungssensordaten eine ausgewählte Bewegungsart anzeigen, ein Empfangen einer GNSS-Ausgabe umfasst, die eine Fortbewegungsgeschwindigkeit der elektronischen Vorrichtung (10) anzeigt.

## Revendications

1. Procédé d'étalonnage de la sortie d'un capteur de pression atmosphérique absolue d'un dispositif électronique (10), comprenant le fait de:
déterminer (40), au niveau d'un processeur (18) du dispositif électronique (10), qu'un emplacement du dispositif électronique (10) se situe à une altitude absolue connue et à l'extérieur;
recevoir (42), au niveau du processeur (18), une pression mesurée du capteur de pression atmosphérique absolue;
calculer (44), au niveau du processeur (18), une différence entre la pression mesurée et une pression de référence, la pression de référence étant déterminée en ajustant une pression moyenne au niveau de la mer sur base de l'altitude absolue connue par rapport au niveau moyen de la mer à l'emplacement du dispositif électronique (10);
mémoriser (46) la différence dans une mémoire du dispositif électronique (10); et
appliquer (48) la différence à la sortie du capteur de pression atmosphérique absolue;
dans lequel la détermination (40) du fait que le dispositif électronique (10) se situe à l'altitude absolue connue et à l'extérieur se réalise sans entrée d'utilisateur,
dans lequel l'altitude absolue connue est le niveau du sol, et
**caractérisé par le fait que**
la détermination (40) du fait que l'emplacement du dispositif électronique (10) se situe au niveau du sol et à l'extérieur comprend le fait de:
recevoir, au niveau du processeur (18) du dispositif électronique (10), les données de capteur de mouvement du dispositif électronique (10); et
recevoir, au niveau d'un sous-système GNSS du dispositif électronique (10) en communication avec le processeur (18), les signaux GNSS,
déterminer que, pendant au moins un laps de temps seuil, les données de capteur de mouvement indiquent un type de mouvement sélectionné et que les signaux GNSS présentent un rapport Signal-Bruit supérieur à un seuil.

2. Procédé selon la revendication 1, dans lequel la détermination (40) du fait que l'emplacement du dispositif électronique (10) se situe à l'altitude absolue connue et à l'extérieur se réalise en réaction à une communication avec une balise d'un réseau de proximité, la balise étant située à l'altitude absolue connue et à l'extérieur.

3. Procédé selon la revendication 1, dans lequel la détermination (40) du fait que les données de capteur de mouvement indiquent un type de mouvement sélectionné comporte le fait de recevoir, au niveau du processeur (18), une sortie GNSS indiquant une vitesse de déplacement du dispositif électronique (10).

4. Procédé selon la revendication 1, dans lequel le type de mouvement sélectionné est la marche ou la course d'un utilisateur transportant le dispositif électronique (10).

5. Support lisible par ordinateur non transitoire présentant, y mémorisé, un code lisible par ordinateur, le code lisible par ordinateur pouvant être exécuté par au moins un processeur (18) du dispositif électronique (10) pour réaliser le procédé selon la revendication 1.

6. Dispositif électronique (10) comprenant:
un capteur de pression atmosphérique absolue (24) destiné à générer une sortie qui indique une altitude absolue du dispositif électronique (10); et
un processeur (18) en communication avec un capteur de mouvement (26) et un sous-système GNSS (12) destiné à déterminer (40) qu'un emplacement du dispositif électronique (10) se situe à une altitude absolue connue et à l'extérieur, le processeur (18): recevant (42) une pression mesurée du capteur de pression atmosphérique absolue (24), calculant (44) une différence entre la pression mesurée et une pression de référence, mémorisant (46) la différence dans la mémoire (20) du dispositif électronique (10) en communication avec le processeur (18) et appliquant (48) la différence à la sortie du capteur de pression atmosphérique absolue (24), la pression de référence étant déterminée en ajustant une pression moyenne au niveau de la mer sur base de l'altitude absolue connue par rapport au niveau moyen de la mer à l'emplacement du dispositif électronique (10),
dans lequel l'altitude absolue connue est le niveau du sol et l'emplacement du dispositif électronique (10) est déterminé comme étant au niveau du sol et à l'extérieur lorsque, pendant au moins un laps de temps seuil, les données du capteur de mouvement (26) indiquent un type de mouvement sélectionné et qu'un rapport Signal-Bruit des signaux GNSS reçus est supérieur à un seuil.

7. Dispositif électronique (10) selon la revendication 6, le type de mouvement sélectionné comprenant la marche ou la course d'un utilisateur transportant le dispositif électronique (10).

8. Dispositif électronique (10) selon la revendication 6, dans lequel la détermination du fait que les données du capteur de mouvement indiquent un type de mouvement sélectionné comporte le fait de recevoir une sortie GNSS indiquant une vitesse de déplacement du dispositif électronique (10).
